# EUROPEAN PATENT SPECIFICATION

(11) **EP 4 478 526 B1**
(45) Date of publication and mention of the grant of the patent: **18.11.2026**
(21) Application number: 23921496.8
(22) Date of filing: 13.12.2023
(51) Int. Cl.: H01M 50/59, H01M 50/591, H01M 50/593, H01M 10/04, H01M 50/211, H01M 50/588, H01M 50/249

(54) **BATTERY MODULE, AND BATTERY PACK AND VEHICLE INCLUDING SAME**
BATTERIEMODUL UND BATTERIEPACK SOWIE FAHRZEUG DAMIT
MODULE DE BATTERIE, BLOC-BATTERIE ET VÉHICULE LES COMPRENANT

(30) Priority: 09.02.2023 KR 20230017551; 26.07.2023 KR 20230097768
(43) Date of publication of application: 18.12.2024
(73) Proprietor: LG Energy Solution, Ltd., Seoul 07335 (KR)
(72) Inventor: PARK, Jeong-Hoon, Daejeon 34122 (KR); SEONG, Jun-Yeob, Daejeon 34122 (KR); KIM, Soo-Youl, Daejeon 34122 (KR)
(74) Representative: Plasseraud IP
(86) International application number: PCT/KR2023/020572
(87) International publication number: WO 2024/167124

(56) References cited:
- CN-A- 114 335 923
- CN-A- 115 133 189
- JP-A- 2001 256 961
- KR-A- 20200 080 078
- KR-A- 20210 037 454
- KR-A- 20210 077 416
- KR-A- 20210 088 170
- KR-A- 20220 170 672
- US-B2- 11 374 277

## Description

### TECHNICAL FIELD

The present application claims priority to Korean Patent Application No. 10-2023-0017551 filed on February 09, 2023 and Korean Patent Application No. 10-2023-0097768 filed on July 26, 2023 in the Republic of Korea.

The present disclosure relates to a battery module, and a battery pack and a vehicle including the same, and more specifically, it relates to a battery module having a plurality of battery cells capable of being charged and discharged, and a battery pack and a vehicle including the battery module.

### BACKGROUND ART

In general, secondary batteries refer to batteries capable of being repeatedly charged and discharged, such as lithium-ion batteries, lithium-polymer batteries, nickel-cadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series, parallel, or a combination thereof and reconnecting these battery modules in series, parallel, or a combination thereof, has been widely used.

In order to increase the energy density of the battery module or battery pack, multiple battery cells are densely disposed in a limited space inside the battery module or battery pack. Therefore, the battery module or battery pack must be designed to have high durability and electrical safety in consideration of the risk of thermal runaway of the battery cells or thermal propagation therebetween.

However, as disclosed in Korean Unexamined Patent Publication No. 10-2021-0104429, the existing technology has a terminal disposed on the outer surface of the metal case to be electrically connected to battery cells accommodated inside a metal case of the battery module, so if high-temperature gases, flames, foreign substances, or the like are discharged from a relevant battery module or other battery modules adjacent to the relevant battery module, the insulating structures supporting the terminal may melt or collapse, resulting in an electrical short circuit between the terminal and the metal case.

This problem, in a battery pack with a layout where the terminal of a battery module faces the terminal of another battery module, may accelerate the chain of thermal runaway or ignition of battery modules and incur a high risk such as explosion of the battery pack.

CN 114 335 923 discloses a terminal block protective cover and a battery module including the same.

US-11,374,277 discloses a secondary battery pack.

KR 2022 0170672 discloses a battery module and a battery pack including the same.

### DISCLOSURE

### Technical Problem

The present disclosure has been designed to solve the problems of the related art, and therefore the present disclosure is directed to providing a battery module that prevents an electrical short circuit between the terminal of the battery module and the end plate even when high-temperature gases, flames, foreign substances, or the like are emitted from the inside of the battery module or from other battery modules adjacent to the battery module, and a battery pack and a vehicle including the same.

### Technical Solution

A battery module according to one aspect of the present disclosure includes: a module frame having an inner space in which a plurality of battery cells is accommodated and an opening leading to the inner space; an insulating cover including a support on which a terminal electrically connected to the plurality of battery cells is disposed and supported, and configured to primarily cover the opening; an end plate having a window through which the support is exposed to the outside and configured to secondarily cover the opening covered by the insulating cover; and a blocking structure configured to cover the support exposed through the window and block an electrical short circuit between the terminal disposed on the support and the end plate.

The blocking structure includes: a coupling portion coupled to the end plate; a cover portion supported by the coupling portion and configured to cover the support and further includes at least one blocking fin configured to contact and support the terminal, thereby blocking contact between the terminal and the end plate when the insulating cover melts.In an embodiment, the support of the insulating cover may include: a seating portion having a seating surface on which the terminal is seated; and partitions extending from the seating portion toward edges of the window so as to isolate the terminal from the edges of the window.

In an embodiment, the partitions may include: a first partition extending downward from a bottom of the seating portion so as to isolate the terminal from a first edge of the window located below the seating portion; and a second partition extending upward from an edge of the seating portion so as to isolate the terminal from a second edge of the window located on a side of the seating portion or above the same.

In an embodiment, the insulating cover may be made of a material having electric insulation and fire resistance.

In an embodiment, the insulating cover may be made of a material including one or more of polyimide, aromatic polyamide, polyphenylene sulfide, polyether ether ketone, and fluoropolymer.

In an embodiment, the at least one blocking fin may be configured to protrude from the cover portion toward the support and contact the terminal disposed on the support.

In an embodiment, the support may have at least one coupling groove into which the at least one blocking fin is inserted and coupled.

In an embodiment, the battery module may further include at least one fixing screw configured to fix the coupling portion to the end plate.

In an embodiment, the blocking structure may be made of a material having electric insulation and fire resistance.

In an embodiment, the blocking structure may be made of a material including silicon or ceramic.

In an embodiment, the blocking structure may be made of a material having a higher melting point than a melting point of the insulating cover.

A battery pack according to another aspect of the present disclosure may include the battery module according to any one of the embodiments described above.

A vehicle according to another aspect of the present disclosure may include the battery module according to any one of the embodiments described above.

### Advantageous Effects

According to the present disclosure, the support of the insulating cover, on which the terminal of the battery module is disposed, is exposed through the window of the end plate, and the blocking structure covers the support exposed through the window and blocks an electrical short circuit between the terminal disposed on the support and the end plate, thereby preventing an electrical short circuit between the terminal and the end plate even if high-temperature gases, flames, foreign substances, or the like are emitted from the relevant battery module or from other battery modules adjacent to the relevant battery module and, as a result, suppressing thermal runaway of the battery module or the chain of thermal runaway between the battery modules.

In addition, the support of the insulating cover is configured to isolate the terminal from the end plate and block contact between the terminal and the end plate, thereby securing electrical safety of the battery module.

In addition, since the insulating cover is made of a fire-resistant material, it is possible to prevent or at least delay damage or collapse of the insulating cover due to high-temperature gas or flame, thereby further improving the electrical safety of the battery module.

In addition, the blocking structure is configured to come into direct contact with the terminal disposed on the support and support the terminal, thereby preventing an electrical short circuit between the terminal and the end plate even if the insulating cover melts or collapses due to high-temperature gas or flame.

In addition, the blocking structure is configured to be coupled and fixed to the end plate, which is generally made of a metal material, thereby preventing the blocking structure from being separated from the battery module by high-pressure gas discharged from the inside of the battery module.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a perspective view illustrating a battery module according to an embodiment of the present disclosure.
FIG. 2 is a partially exploded view of the battery module shown in FIG. 1.
FIG. 3 is a diagram illustrating a battery cell assembly of a battery module according to an embodiment of the present disclosure.
FIG. 4 is a diagram illustrating a bus-bar frame of the battery cell assembly shown in FIG. 3.
FIG. 5 is a diagram illustrating an insulating cover of a battery module according to an embodiment of the present disclosure.
FIG. 6 is a diagram illustrating an end plate of a battery module according to an embodiment of the present disclosure.
FIG. 7 is a front perspective view illustrating a blocking structure of a battery module according to an embodiment of the present disclosure.
FIG. 8 is a rear perspective view illustrating the blocking structure shown in FIG. 7.
FIG. 9 is a diagram illustrating a battery module according to a modified embodiment of the present disclosure.
FIG. 10 is a partially exploded view illustrating the battery module shown in FIG. 9.
FIG. 11 is a diagram illustrating a battery pack according to an embodiment of the present disclosure.
FIG. 12 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

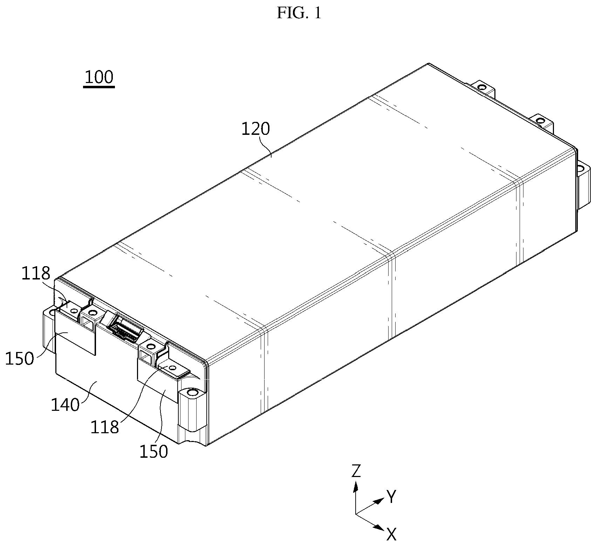

FIG. 1 is a perspective view illustrating a battery module 100 according to an embodiment of the present disclosure.

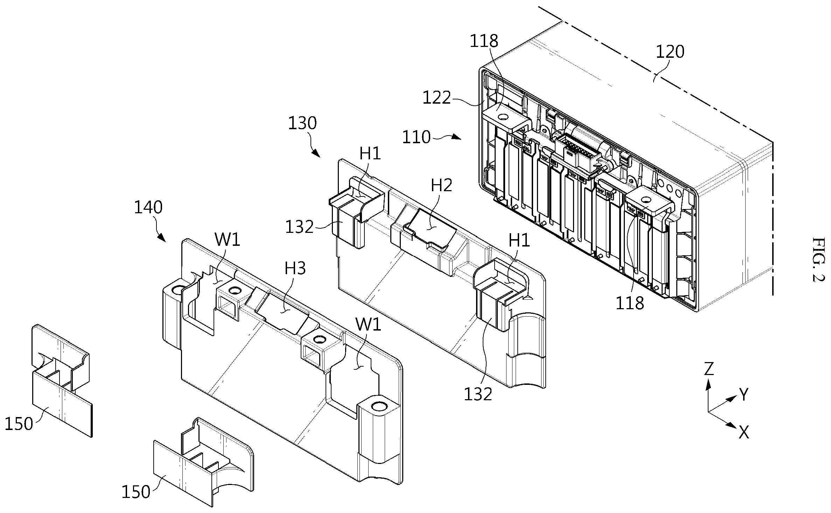

FIG. 2 is a partially exploded view of the battery module 100 shown in FIG. 1.

As shown in FIGS. 1 and 2, the battery module 100 according to an embodiment of the present disclosure includes a module frame 120, an insulating cover 130, an end plate 140, and a blocking structure 150.

The module frame 120 is configured to accommodate a plurality of battery cells. To this end, the module frame 120 may have an inner space in which a plurality of battery cells is accommodated, and an opening 122 leading to the inner space. For example, the module frame 120 may accommodate a battery cell assembly 110 including a plurality of battery cells in the inner space.

The insulating cover 130 is configured to primarily cover the opening 122 of the module frame 120. The insulating cover 130 may be provided with a support 132 on which a terminal electrically connected to the plurality of battery cells accommodated in the module frame 120 is disposed and supported.

The end plate 140 is configured to secondarily cover the opening 122 covered by the insulating cover 130. The end plate 140 may have a window W1 through which the support 132 of the insulating cover 130 is exposed to the outside.

The blocking structure 150 is configured to cover the support 132 of the insulating cover 130 exposed through the window W1 of the end plate 140 and block an electrical short circuit between a terminal 118 disposed on the support 132 and the end plate 140. To this end, at least a portion of the blocking structure 150 may be configured to be located between the edges of the window W1 and the terminal 118.

For example, the module frame 120 may have an opening 122 at at least one end of the battery module 100 in the longitudinal direction (±Y-axis direction) and accommodate a battery cell assembly 110 including a plurality of battery cells in the inner space leading to the opening 122.

In this case, the module frame 120 may be configured in the form of a tube having openings provided at both ends thereof in the longitudinal direction (±Y-axis direction). In addition, the module frame 120 may be made of a metal material with a high rigidity and heat resistance. The module frame 120 may be manufactured integrally through a sheet metal and welding process or an injection process.

In an embodiment, the module frame 120 may be made of clad metal obtained by bonding different types of metals. That is, the module frame 120 may be configured as a multi-layered metal plate in which a first metal plate and a second metal plate are bonded to each other.

In this case, the first metal plate constituting the outer surface of the module frame 120 may be made of a material with higher thermal conductivity than the second metal plate constituting the inner surface of the module frame 120, and the second metal plate may be made of a material that has higher heat resistance and fire resistance than the first metal plate. For example, the first metal plate may be made of a material including aluminum Al, and the second metal plate may be made of a material including stainless steel. For reference, the melting point of aluminum is approximately 660 degrees C, and the melting point of stainless steel is approximately 2750 degrees C.

As described above, the insulating cover 130 may be configured to have a support 132 on which the terminal 118 is disposed and supported, and to primarily cover the opening 122 of the module frame 120.

In this case, the insulating cover 130 may include a guide hole H1 that guides the terminal 118 to the support 132. In addition, the insulating cover 130 may include a first connector hole H2 through which a connector for transmitting electrical signals of battery cells included in the battery cell assembly 110 is exposed to the outside.

As will be explained below, the support 132 may include a seating portion having a seating surface on which the terminal 118 is seated and partitions that extend from the seating portion to edges of the window W1 provided on the end plate 140 and isolate the terminal 118 from the edges of the window W1.

This insulating cover 130 may be made of polymer synthetic resin with electric insulation. In particular, the insulating cover 130 may be made of a material with high fire resistance as well as electric insulation.

The end plate 140 may be configured to have the window W1 through which the support 132 of the insulating cover 130 is exposed to the outside and secondarily cover the opening 122 of the module frame 120 covered by the insulating cover 130. In addition, the end plate 140 may have a second connector hole H3, which is provided at a position corresponding to the first connector hole H2 of the insulating cover 130, through which the corresponding connector is exposed to the outside.

The end plate 140 may be made of a metal material with a high rigidity and heat resistance.

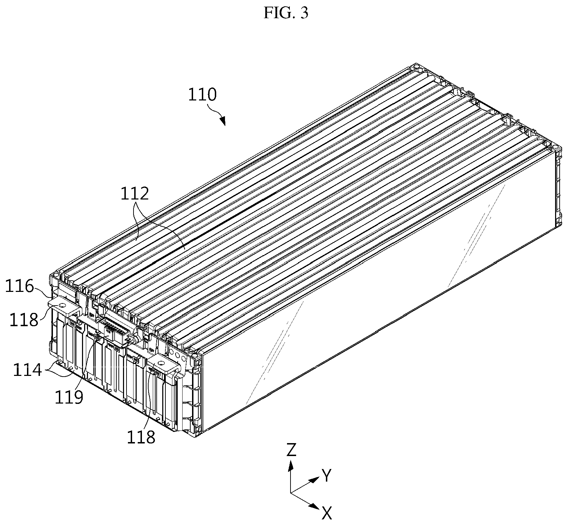

FIG. 3 is a diagram illustrating a battery cell assembly 110 of a battery module according to an embodiment of the present disclosure.

As shown in FIG. 3, the battery cell assembly 110 may include a plurality of battery cells 112, a bus-bar 114, and a bus-bar frame 116.

The plurality of battery cells 112 may be densely arranged in the width direction (±X-axis direction) of the battery module. Each battery cell 112 is the most fundamental secondary battery capable of being charged and discharged and may be implemented in various forms.

For example, the battery cell 112 may be implemented as a pouch-type secondary battery. In this case, the battery cell 112 may be manufactured by storing an electrode assembly and an electrolyte inside a pouch-shaped case and sealing the case. In this case, the pouch-shaped case may be comprised of one or two pouch sheets.

The battery cell 112 may have a pair of electrode leads. Each electrode lead may be configured such that one end thereof is electrically connected to the electrode assembly accommodated inside the case and such that the other end extends and is exposed to the outside of the case.

In another embodiment, the plurality of battery cells 112 may be implemented as cylindrical secondary batteries or prismatic secondary batteries, respectively.

As shown in FIG. 3, the plurality of battery cells 112 may be stacked on each other in the horizontal direction (±X-axis direction) while standing upright in the vertical direction (±Z-axis direction).

The bus-bar 114 may be configured to be electrically connected to the electrode lead of the battery cell 112 or the terminal 118. To this end, the bus-bar 114 may be made of a conductive material such as metal.

The bus-bar frame 116 may be configured to support one or more bus-bars 114. The bus-bar frame 116 may be made of electrically insulating material. As will be explained below, the bus-bar frame 116 may be made of a material having high fire resistance as well as electric insulation.

In addition, the battery cell assembly 110 may further include a terminal 118 that is electrically connected to the battery cells through the bus-bar 114 and provides the output voltage of the battery module 100, and a connector 119 that transmits electrical signals related to the battery cells. In this case, the terminal 118 and the connector 119 may be supported by the bus-bar frame 116.

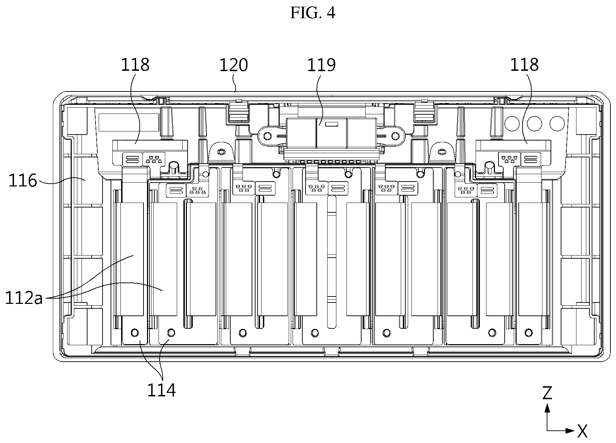

FIG. 4 illustrates a bus-bar frame 116 of the battery cell assembly 110 shown in FIG. 3.

As shown in FIG. 4, the bus-bar frame 116 may be configured to be disposed in the inner space of the module frame 120, for example, between the plurality of battery cells accommodated in the module frame 120 and the insulating cover 130 covering the opening of the module frame 120, thereby supporting at least one bus-bar 114. In this case, each bus-bar 114 may be electrically connected to the electrode lead 112a of the battery cell 112 or the terminal 118 of the battery module 100.

The terminal 118, which is electrically connected to the battery cells through the bus-bar 114, and the connector 119, which transmits electrical signals of the battery cells, may be supported by the bus-bar frame 116.

This bus-bar frame 116 may be made of a material having high fire resistance as well as electric insulation. For example, the bus-bar frame 116 may be made of a material including one or more of polyimide, aromatic polyamide, polyphenylene sulfide, polyether ether ketone, fluoropolymer, and ceramic.

As described above, since the bus-bar frame 116, which is disposed between the plurality of battery cells 112 included in the battery module and the insulating cover 130 to support the bus-bars, is made of a material with electric insulation and high fire resistance, it is possible to suppress structural deformation of the bus-bar frame even if high-temperature gas or flame is generated inside the battery module, thereby preventing an electrical short circuit resulting from contact between the bus-bars.

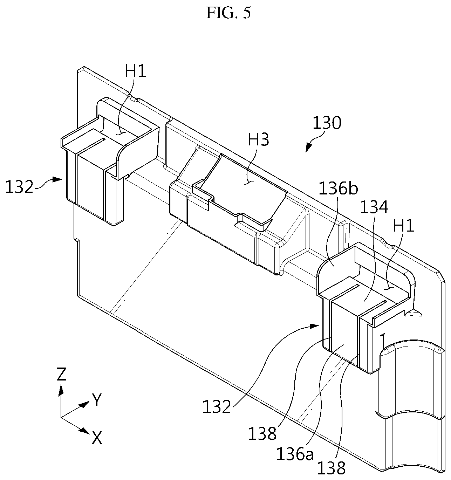

FIG. 5 is a perspective view illustrating an insulating cover 130 of a battery module according to an embodiment of the present disclosure.

As shown in FIG. 5, the insulating cover 130 may be configured to have a support 132 and primarily cover the opening 122 of the module frame 120. The terminal 118, which is electrically connected to the battery cells of the battery cell assembly 110, is disposed and supported on the support 132. To this end, the insulating cover 130 may include a guide hole H1 that guides the terminal 118 to the support 132.

Depending on the embodiment, the insulating cover 130 may include a first connector hole H2 through which a connector for transmitting electrical signals of battery cells included in the battery cell assembly 110 is exposed to the outside.

In addition, the support 132 may include a seating portion 134 having a seating surface on which the terminal 118 is seated and partitions 136a and 136b that extend from the seating portion 134 to edges of the window W1 provided on the above-described end plate 140 and isolate the terminal 118 from the edges of the window W1.

In this case, the partitions 136a and 136b may include a first partition 136a and a second partition 136b.

The first partition 136a may be configured to extend downward from the bottom of the seating portion 134 so as to isolate the terminal 118 from an edge of the window W1 located below the seating portion 134.

The second partition 136b may be configured to extend upward from the edge of the seating portion 134 so as to isolate the terminal 118 from another edge of the window W1 located on the side of the seating portion 134 or above the same.

As described above, although the terminal 118 of the battery module 100 is located inside the window W1 of the end plate 140, since the support 132 of the insulating cover 130 is configured to isolate the terminal 118 from the edges of the window W1 and block contact between the terminal 118 and the end plate 140, it is possible to prevent an electrical short circuit between the terminal 118 and the end plate 140 due to damage or collapse of the insulation structure even if high-temperature gas or flame is generated from the relevant battery module or from other battery modules adjacent to the relevant battery module, thereby suppressing thermal runaway of the battery module or the chain of thermal runaway between the battery modules.

As will be described below, the support 132 of the insulating cover 130 may further include at least one coupling groove 138 into which at least a portion of a blocking structure configured to support the terminal 118 is inserted and coupled.

The insulating cover 130 may be made of polymer synthetic resin with electric insulation. In particular, the insulating cover 130 may be made of a material with high fire resistance as well as electric insulation.

For example, the insulating cover 130 may be made of a material including one or more of polyimide, aromatic polyamide, polyphenylene sulfide, polyether ether ketone, fluoropolymer, and ceramic.

As described above, since the insulating cover 130 is made of a material with high fire resistance, it is possible to prevent or delay damage or collapse of the insulating cover due to high-temperature gas or flame, thereby further improving the electrical safety of the battery module.

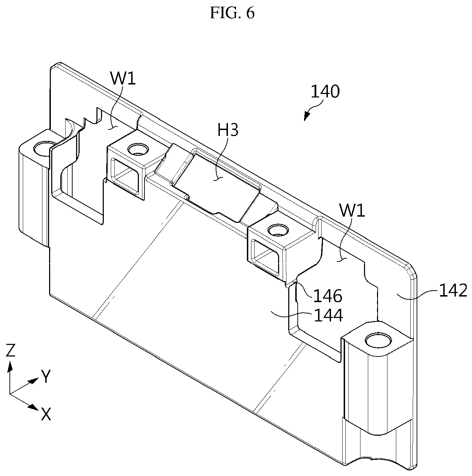

FIG. 6 is a perspective view illustrating an end plate 140 of a battery module according to an embodiment of the present disclosure.

As shown in FIG. 6, the end plate 140 may be configured to have a window W1 through which the support 132 of the insulating cover 130 is exposed to the outside and secondarily cover the opening 122 of the module frame 120 covered by the insulating cover 130.

In addition, the end plate 140 may have a second connector hole H3, which is provided at a position corresponding to the first connector hole H2 of the insulating cover 130, through which the connector 119 inserted into the first connector hole H2 is exposed to the outside.

As will be described below, the end plate 140 may include coupling portions 142 and 144 to which a blocking structure 150 configured to support the terminal 118 is coupled. In addition, the end plate 140 may further include a support portion 146 that comes into contact with a portion of the blocking structure 150 and supports the blocking structure 150 .

The end plate 140 may be made of a metal material with high rigidity and heat resistance. In addition, the end plate 140 may be coupled to the module frame 120 by laser welding so as to cover the opening 122 of the module frame 120 described above. Meanwhile, in the case where openings are provided at both ends of the module frame 120, the battery module 100 may further include, in addition to the end plate 140 that covers the opening at one end of the module frame 120, the other end plate that covers the opening at the other end of the module frame 120. In this case, the other end plate may exclude the configurations corresponding to the window W1, the second connector hole H3, the coupling portions 142 and 144, and the support portion 146 of the end plate 140.

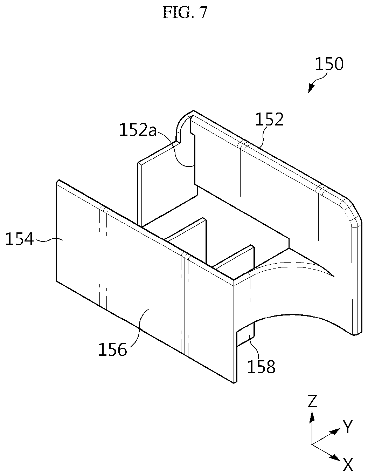

FIG. 7 is a front perspective view illustrating a blocking structure 150 of a battery module according to an embodiment of the present disclosure.

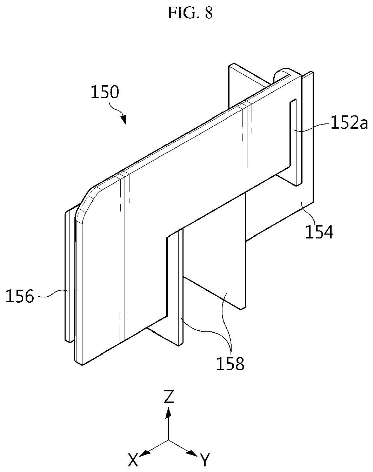

FIG. 8 is a rear perspective view illustrating the blocking structure 150 shown in FIG. 7.

As shown in FIGS. 7 and 8, the blocking structure 150 may be configured to cover the support 132 of the insulating cover 130 exposed through the window W1 of the end plate 140 and block an electrical short circuit between the terminal 118 disposed on the support 132 and the end plate 140. The blocking structure 150 may be configured to be coupled and fixed to the end plate 140, which is generally made of a metal material.

To this end, the blocking structure 150 may include coupling portions 152 and 154 coupled to the end plate 140, and a cover portion 156 that is supported by the coupling portions 152 and 154 and covers the support 132 of the insulating cover 130.

In this case, the coupling portions 152 and 154 may be coupled to the end plate 140 in various ways. For example, the coupling portions 152 and 154 may be coupled to the end plate 140 by screws, fitting, adhesives, or a combination of two or more thereof.

In an embodiment, the coupling portions 152 and 154 may include a first coupling portion 152 coupled to one portion (142 in FIG. 6) of the end plate 140 and a second coupling portion 154 coupled to another portion (144 in FIG. 6) of the end plate 140.

In an embodiment, the blocking structure 150 may have an alignment groove 152a into which the second partition 136b of the support 132 described above is inserted. If the second partition 136b of the support 132 is accurately inserted into the alignment groove 152a of the blocking structure 150, other portions of the blocking structure 150 may be disposed at correct positions.

The cover portion 156 may be configured to cover the support 132 exposed through the window W1 of the end plate 140. Depending on the embodiment, the cover portion 156 may be configured to cover at least a portion of the terminal 118 disposed on the support 132.

The cover portion 156 may be formed integrally with the coupling portions 152 and 154.

According to the invention, the blocking structure 150 includes at least one blocking fin 158. In this case, the at least one blocking fin 158 is configured to be located between the edge of the window W1 and the terminal 118 and come into contact with the terminal 118 disposed on the support 132 of the insulating cover 130 to support the terminal 118, thereby blocking contact between the terminal 118 and the end plate even when the insulating cover 130 melts.

In this case, each blocking fin 158 may be configured to protrude from the cover portion 156 toward the support 132 of the insulating cover 130 to come into contact with the terminal 118 disposed on the support 132. To this end, the support 132 of the insulating cover 130 may have at least one coupling groove (158 in FIG. 5) into which the at least one blocking fin 158 is inserted and coupled.

The at least one blocking fin 158 may be formed integrally with the cover portion 156.

In addition, the blocking structure 150 may be made of a material that has electric insulation and fire resistance. In this case, the blocking structure 150 may be made of a refractory material with a higher melting point than the insulating cover 130. For example, the blocking structure 150 may be made of a material including silicon or ceramic.

As described above, the blocking structure 150 made of a refractory material with a higher melting point than the insulating cover 130 is coupled to the support 132 of the insulating cover 130 and supports the terminal 118 seated on the support 132, thereby preventing an electrical short circuit between the terminal 118 and the end plate 140 even if the insulating cover 130 melts or collapses due to high-temperature gas or flame.

In addition, since the blocking structure 150 is coupled and fixed to the end plate 140 made of metal, the terminal 118 may be safely supported even when the insulating cover 130 melts or collapses.

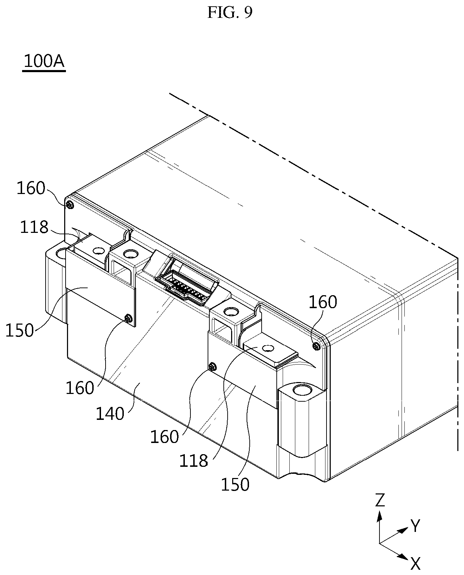

FIG. 9 illustrates a battery module 100A according to a modified embodiment of the present disclosure.

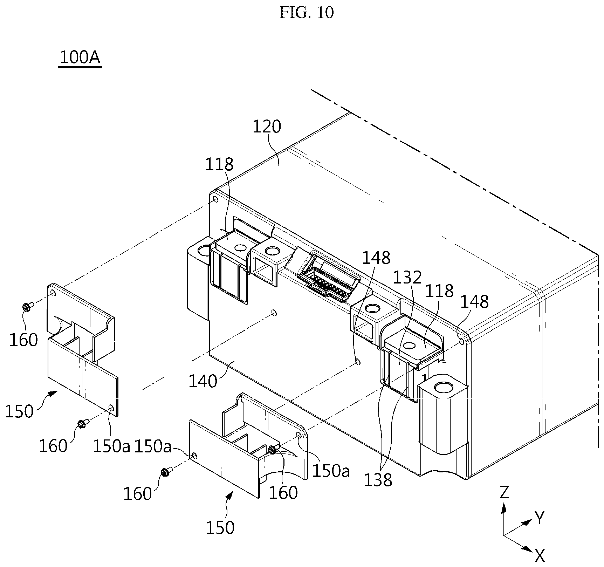

FIG. 10 is a partially exploded view illustrating the battery module 100A shown in FIG. 9.

As shown in FIGS. 9 and 10, the battery module 100A according to a modified embodiment may further include a fixing screw 160.

The fixing screw 160 may be configured to fix the coupling portions 152 and 154 of the blocking structure 150 to the end plate 140. In this case, the blocking structure 150 may have a through-hole 150a through which the body of the fixing screw 160 passes. In addition, the end plate 140 may have a screw hole 148 with which the fixing screw 160 is fastened.

As described above, the blocking structure 150 is fixed to the end plate 140 by the fixing screw 160, thereby preventing the blocking structure from being separated from the battery module by high-pressure gas discharged from the inside of the battery module.

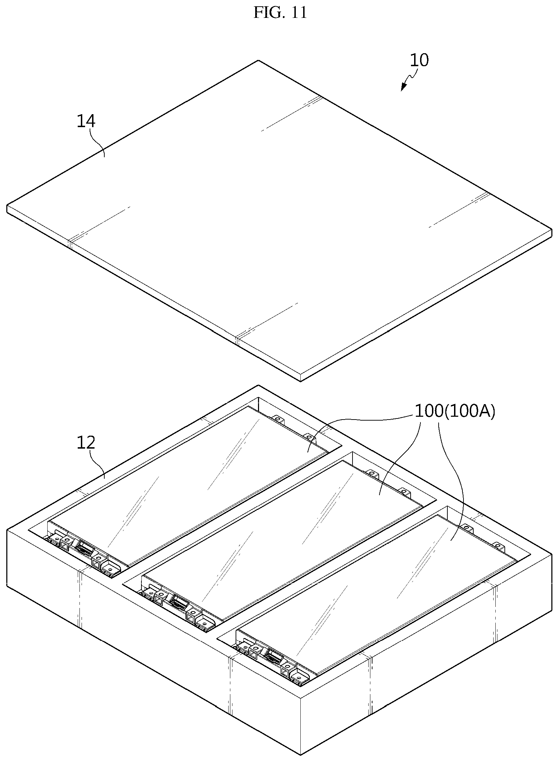

FIG. 11 is a diagram illustrating a battery pack 10 according to an embodiment of the present disclosure.

As shown in FIG. 11, the battery pack 10 according to an embodiment of the present disclosure may include the battery module 100 or 100A according to the various embodiments described above. In addition, the battery pack 10 may further include a pack case 12 and 14 accommodating one or more battery modules 100 or 100A.

The pack case 12 and 14 may include a pack tray 12 having an accommodation space for accommodating a plurality of battery modules, and a pack lid 14 that covers the top opening of the pack tray 12.

In addition, the battery pack 10 may further include various electrical components (not shown) that control the charging and discharging operation of the battery module 100 or 100A accommodated in the pack case 12 and 14 or the battery cell included in the battery module 100 or 100A, or monitor SOC (State of Charge), SOH (State of Health), or the like. These electronic components may be accommodated in the pack case 12 and 14 along with the battery module 100.

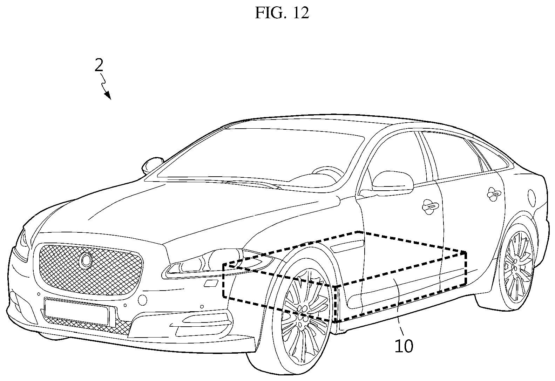

FIG. 12 is a diagram illustrating a vehicle 2 according to an embodiment of the present disclosure.

As shown in FIG. 12, the vehicle 2 according to an embodiment of the present disclosure may include the battery module 100 or 100A according to the various embodiments described above. For example, the vehicle 2 may include a battery pack 10 including one or more battery modules 100 or 100A. In this case, the battery module 100 or 100A or the battery pack 10 including the same may supply the electric energy required for various operations of the vehicle 2.

In this case, the vehicle 2 may further include an electric motor that drives the vehicle 2 using the electric energy supplied from the battery module 100 or 100A or the battery pack 10 including the same.

For reference, the battery module 100 or 100A according to the present disclosure may be applied to various electric devices or electric systems that use electric energy, in addition to vehicles, as well as to ESSs (Energy Storage Systems).

According to the present disclosure, the support of the insulating cover on which the terminal of the battery module is disposed is exposed through the window of the end plate, and the blocking structure covers the support exposed through the window and blocks an electrical short circuit between the terminal disposed on the support and the end plate, thereby preventing an electrical short circuit between the terminal and the end plate even if high-temperature gases, flames, foreign substances, or the like are emitted from the relevant battery module or from other battery modules adjacent to the relevant battery module and, as a result, suppressing thermal runaway of the battery module or the chain of thermal runaway between the battery modules.

In addition, the support of the insulating cover is configured to isolate the terminal from the end plate and block contact between the terminal and the end plate, thereby securing electrical safety of the battery module.

In addition, since the insulating cover is made of a fire-resistant material, it is possible to prevent or at least delay damage or collapse of the insulating cover due to high-temperature gas or flame, thereby further improving the electrical safety of the battery module.

In addition, the blocking structure is configured to come into direct contact with the terminal disposed on the support and support the terminal, thereby preventing an electrical short circuit between the terminal and the end plate even if the insulating cover melts or collapses due to high-temperature gas or flame.

In addition, the blocking structure is configured to be coupled and fixed to the end plate, which is generally made of a metal material, thereby preventing the blocking structure from being separated from the battery module by high-pressure gas discharged from the inside of the battery module.

Furthermore, the embodiments according to the present disclosure are able to solve various technical problems other than those mentioned in this specification in the relevant technical field as well as related technical fields.

## Claims

1. A battery module comprising:
a module frame (120) having an inner space in which a plurality of battery cells (112) is accommodated and an opening leading to the inner space;
an insulating cover (130) comprising a support (132) on which a terminal (118) electrically connected to the plurality of battery cells is disposed and supported, and configured to primarily cover the opening;
an end plate (140) having a window (W1) through which the support (132) is exposed to the outside and configured to secondarily cover the opening covered by the insulating cover (130); and
a blocking structure (150) configured to cover the support (132) exposed through the window (W1) and block an electrical short circuit between the terminal (118) disposed on the support (132) and the end plate (140),
**characterised in that** the blocking structure (150) comprises:
a coupling portion (154) coupled to the end plate (140);
a cover portion (156) supported by the coupling portion (154) and configured to cover the support (132);
at least one blocking fin (158) configured to contact and support the terminal (118), thereby blocking contact between the terminal (118) and the end plate (140) when the insulating cover (130) melts.

2. The battery module according to claim 1, wherein the support (132) of the insulating cover comprises:
a seating portion (134) having a seating surface on which the terminal (118) is seated; and
partitions (136a, 136b) extending from the seating portion (134) toward edges of the window (W1) so as to isolate the terminal (118) from the edges of the window.

3. The battery module according to claim 2, wherein the partitions comprise:
a first partition (136a) extending downward from a bottom of the seating portion (134) so as to isolate the terminal (118) from a first edge of the window located below the seating portion (134); and
a second partition (136b) extending upward from an edge of the seating portion (134) so as to isolate the terminal (118) from a second edge of the window located on a side of the seating portion (134) or above the same.

4. The battery module according to claim 1, wherein the insulating cover (130) is made of a material having electric insulation and fire resistance.

5. The battery module according to claim 4, wherein the insulating cover (130) is made of a material comprising one or more of polyimide, aromatic polyamide, polyphenylene sulfide, polyether ether ketone, and fluoropolymer.

6. The battery module according to claim 1, wherein the at least one blocking fin (158) is configured to protrude from the cover portion (156) toward the support (132) and contact the terminal (118) disposed on the support (132).

7. The battery module according to claim 1, wherein the support (132) has at least one coupling groove (138) into which the at least one blocking fin (158) is inserted and coupled.

8. The battery module according to claim 1, further comprising at least one fixing screw (160) configured to fix the coupling portion (142) to the end plate (140).

9. The battery module according to claim 1, wherein the blocking structure (150) is made of a material having electric insulation and fire resistance.

10. The battery module according to claim 9, wherein the blocking structure (150) is made of a material comprising silicon or ceramic.

11. The battery module according to claim 1, wherein the blocking structure (150) is made of a material having a higher melting point than a melting point of the insulating cover (130).

12. A battery pack comprising the battery module according to any one of claims 1 to 11.

13. A vehicle comprising the battery module according to any one of claims 1 to 11.

## Patentansprüche

1. Batteriemodul, umfassend:
• einen Modulrahmen (120), der einen Innenraum, in dem eine Vielzahl von Batteriezellen (112) untergebracht ist, und eine Öffnung aufweist, die in den Innenraum führt;
• eine Isolierabdeckung (130), die einen Träger (132) umfasst, auf dem ein Anschluss (118), der mit der Vielzahl von Batteriezellen elektrisch verbunden ist, angeordnet und getragen ist, und die so konfiguriert ist, dass sie die Öffnung primär abdeckt;
• eine Endplatte (140), die ein Fenster (W1) aufweist, durch das der Träger (132) nach außen freiliegt, und die so konfiguriert ist, dass sie die durch die Isolierabdeckung (130) abgedeckte Öffnung sekundär abdeckt; und
• eine Blockierstruktur (150), die so konfiguriert ist, dass sie den durch das Fenster (W1) freiliegenden Träger (132) abdeckt und einen elektrischen Kurzschluss zwischen dem auf dem Träger (132) angeordneten Anschluss (118) und der Endplatte (140) blockiert,
• **dadurch gekennzeichnet, dass** die Blockierstruktur (150) umfasst:
• einen Kopplungsabschnitt (154), der mit der Endplatte (140) gekoppelt ist;
• einen Abdeckabschnitt (156), der von dem Kopplungsabschnitt (154) getragen wird und so konfiguriert ist, dass er den Träger (132) abdeckt;
• mindestens eine Blockierrippe (158), die so konfiguriert ist, dass sie den Anschluss (118) kontaktiert und trägt, wodurch ein Kontakt zwischen dem Anschluss (118) und der Endplatte (140) blockiert wird, wenn die Isolierabdeckung (130) schmilzt.

2. Batteriemodul nach Anspruch 1, wobei der Träger (132) der Isolierabdeckung umfasst:
• einen Sitzabschnitt (134) mit einer Sitzfläche, auf der der Anschluss (118) aufsitzt; und
• Trennwände (136a, 136b), die sich von dem Sitzabschnitt (134) in Richtung von Rändern des Fensters (W1) erstrecken, um den Anschluss (118) von den Rändern des Fensters zu isolieren.

3. Batteriemodul nach Anspruch 2, wobei die Trennwände umfassen:
• eine erste Trennwand (136a), die sich von einer Unterseite des Sitzabschnitts (134) nach unten erstreckt, um den Anschluss (118) von einem ersten Rand des Fensters zu isolieren, der sich unterhalb des Sitzabschnitts (134) befindet; und
• eine zweite Trennwand (136b), die sich von einem Rand des Sitzabschnitts (134) nach oben erstreckt, um den Anschluss (118) von einem zweiten Rand des Fensters zu isolieren, der sich auf einer Seite des Sitzabschnitts (134) oder oberhalb desselben befindet.

4. Batteriemodul nach Anspruch 1, wobei die Isolierabdeckung (130) aus einem Material hergestellt ist, das eine elektrische Isolierung und Feuerbeständigkeit aufweist.

5. Batteriemodul nach Anspruch 4, wobei die Isolierabdeckung (130) aus einem Material hergestellt ist, das eines oder mehrere von Polyimid, aromatischem Polyamid, Polyphenylensulfid, Polyetheretherketon und Fluorpolymer umfasst.

6. Batteriemodul nach Anspruch 1, wobei die mindestens eine Blockierrippe (158) so konfiguriert ist, dass sie von dem Abdeckabschnitt (156) in Richtung des Trägers (132) vorsteht und den auf dem Träger (132) angeordneten Anschluss (118) kontaktiert.

7. Batteriemodul nach Anspruch 1, wobei der Träger (132) mindestens eine Kopplungsnut (138) aufweist, in die die mindestens eine Blockierrippe (158) eingesetzt und gekoppelt ist.

8. Batteriemodul nach Anspruch 1, ferner umfassend mindestens eine Befestigungsschraube (160), die so konfiguriert ist, dass sie den Kopplungsabschnitt (142) an der Endplatte (140) befestigt.

9. Batteriemodul nach Anspruch 1, wobei die Blockierstruktur (150) aus einem Material hergestellt ist, das eine elektrische Isolierung und Feuerbeständigkeit aufweist.

10. Batteriemodul nach Anspruch 9, wobei die Blockierstruktur (150) aus einem Material hergestellt ist, das Silizium oder Keramik umfasst.

11. Batteriemodul nach Anspruch 1, wobei die Blockierstruktur (150) aus einem Material hergestellt ist, das einen höheren Schmelzpunkt als ein Schmelzpunkt der Isolierabdeckung (130) aufweist.

12. Batteriepack, umfassend das Batteriemodul nach einem der Ansprüche 1 bis 11.

13. Fahrzeug, umfassend das Batteriemodul nach einem der Ansprüche 1 bis 11.

## Revendications

1. Module de batterie comprenant :
un boîtier de module (120) ayant un espace interne dans lequel une pluralité d'éléments de batterie (112) est logée et une ouverture menant à l'espace interne ;
un couvercle isolant (130) comprenant un support (132) sur lequel une borne (118) connectée électriquement à la pluralité d'éléments de batterie est disposée et supportée, et configuré pour recouvrir principalement l'ouverture ;
une plaque d'extrémité (140) ayant une fenêtre (W1) à travers laquelle le support (132) est exposé à l'extérieur et configurée pour recouvrir secondairement l'ouverture recouverte par le couvercle isolant (130) ; et
une structure de blocage (150) configurée pour recouvrir le support (132) exposé à travers la fenêtre (W1) et bloquer un court-circuit électrique entre la borne (118) disposée sur le support (132) et la plaque d'extrémité (140),
**caractérisé en ce que** la structure de blocage (150) comprend :
une partie de couplage (154) couplée à la plaque d'extrémité (140) ;
une partie de couvercle (156) supportée par la partie de couplage (154) et configurée pour recouvrir le support (132) ;
au moins une ailette de blocage (158) configurée pour venir en contact avec et supporter la borne (118), bloquant ainsi le contact entre la borne (118) et la plaque d'extrémité (140) lorsque le couvercle isolant (130) fond.

2. Module de batterie selon la revendication 1, dans lequel le support (132) du couvercle isolant comprend :
une partie d'assise (134) ayant une surface d'assise sur laquelle la borne (118) repose ; et
des cloisons (136a, 136b) s'étendant à partir de la partie d'assise (134) vers des bords de la fenêtre (W1) de façon à isoler la borne (118) des bords de la fenêtre.

3. Module de batterie selon la revendication 2, dans lequel les cloisons comprennent :
une première cloison (136a) s'étendant vers le bas à partir d'un fond de la partie d'assise (134) de façon à isoler la borne (118) d'un premier bord de la fenêtre situé au-dessous de la partie d'assise (134) ; et
une seconde cloison (136b) s'étendant vers le haut à partir d'un bord de la partie d'assise (134) de façon à isoler la borne (118) d'un second bord de la fenêtre situé sur un côté de la partie d'assise (134) ou au-dessus de celle-ci.

4. Module de batterie selon la revendication 1, dans lequel le couvercle isolant (130) est constitué d'un matériau présentant une isolation électrique et une résistance au feu.

5. Module de batterie selon la revendication 4, dans lequel le couvercle isolant (130) est réalisé dans un matériau comprenant un ou plusieurs éléments parmi un polyimide, un polyamide aromatique, un sulfure de polyphénylène, un polyétheréthercétone et un fluoropolymère.

6. Module de batterie selon la revendication 1, dans lequel l'au moins une ailette de blocage (158) est configurée pour faire saillie depuis la partie de couvercle (156) vers le support (132) et venir en contact avec la borne (118) disposée sur le support (132).

7. Module de batterie selon la revendication 1, dans lequel le support (132) présente au moins une rainure de couplage (138) dans laquelle l'au moins une ailette de blocage (158) est insérée et couplée.

8. Module de batterie selon la revendication 1, comprenant en outre au moins une vis de fixation (160) configurée pour fixer la partie de couplage (142) à la plaque d'extrémité (140).

9. Module de batterie selon la revendication 1, dans lequel la structure de blocage (150) est constituée d'un matériau présentant une isolation électrique et une résistance au feu.

10. Module de batterie selon la revendication 9, dans lequel la structure de blocage (150) est réalisée dans un matériau comprenant du silicone ou de la céramique.

11. Module de batterie selon la revendication 1, dans lequel la structure de blocage (150) est constituée d'un matériau ayant un point de fusion plus élevé qu'un point de fusion du couvercle isolant (130).

12. Pack-batterie comprenant le module de batterie selon l'une quelconque des revendications 1 à 11.

13. Véhicule comprenant le module de batterie selon l'une quelconque des revendications 1 à 11.
